# FASCICULE DE BREVET EUROPEEN

(11) **EP 3 160 882 B1**
(45) Date de publication et mention de la délivrance du brevet: **13.06.2018**
(21) Numéro de dépôt: 15738723.4
(22) Date de dépôt: 17.06.2015
(51) Int. Cl.: B65G 49/06, C03C 17/00, C03C 17/23, C03C 17/34, C03C 17/36

(54) **PROCEDE D'ACTIVATION DE COUCHE SUR SUBSTRAT VERRIER**
VERFAHREN ZUR AKTIVIERUNG EINER SCHICHT AUF EINEM GLASSUBSTRAT
METHOD FOR ACTIVATING A LAYER ON A GLASS SUBSTRATE

(30) Priorité: 27.06.2014 FR 1456054
(43) Date de publication de la demande: 03.05.2017
(73) Titulaire: Saint-Gobain Glass France, 92400 Courbevoie (FR)
(72) Inventeur: LAMINE, Driss, F-92160 Antony (FR)
(74) Mandataire: Saint-Gobain Recherche
(86) Numéro de dépôt international: PCT/FR2015/051606
(87) Numéro de publication internationale: WO 2015/197948

(56) Documents cités:
- DE-C1- 19 809 582
- US-A- 5 073 181
- US-A1- 2003 092 362
- US-A1- 2012 000 247
- "HEAT SOAKING PROCESS", , 5 novembre 2012 (2012-11-05), XP055179697, Extrait de l'Internet: URL:http://www.garibaldiglass.com/wp-conte nt/uploads/2012/08/Heat-Soaking-PB0011.pdf [extrait le 2015-03-27]
- ABERLE ET AL: "Thin-film solar cells", THIN SOLID FILMS, ELSEVIER-SEQUOIA S.A. LAUSANNE, CH, vol. 517, no. 17, 1 juillet 2009 (2009-07-01), pages 4706-4710, XP026131754, ISSN: 0040-6090, DOI: 10.1016/J.TSF.2009.03.056 [extrait le 2009-03-17]

## Description

L'invention concerne un procédé pour activer une couche déposée sur un substrat verrier, notamment une couche bas émissive à base d'ITO ou d'argent ou une couche autonettoyante.

Aujourd'hui, pour chauffer des verres à couche, notamment de taille industrielle, par exemple de taille d'au moins 4 m², par exemple un substrat de taille 3mx2m à des températures supérieures à 200°C afin de lui donner ses performances finales, comme par exemple l'activité photocatalytique d'une couche auto-nettoyante ou la basse émissivité d'une couche d'ITO ou d'argent, et ce sans modifier, comme par exemple sans tremper ni durcir le substrat verrier supportant la couche, différents procédés de traitement thermique existent:
- activation de la couche par un procédé reposant sur une technologie de type laser ou lampe flash ; grâce à l'absorption du rayonnement de la source, la couche peut être chauffée sans chauffage excessif du substrat verrier ; ce procédé peut être réalisé en ligne à la fin du procédé de fabrication de la couche, par exemple après le dépôt de la couche par pulvérisation magnétron ; ce procédé procure les inconvénients suivants :
   - coût de développement très élevé pour des tailles industrielles et risques technologiques importants
   - le traitement est difficilement homogène, surtout pour les plus grandes tailles de substrats, notamment supérieures à 15 m²; risques de sécurité par rapport au personnel opérant sur la ligne en raison de la puissance des rayonnements nécessaires ;
   - l'empilement doit être initialement absorbant dans le domaine spectral de la source, ce qui peut nécessiter l'application de couches absorbantes supplémentaires. Certaines couches, notamment SiO₂ pour une application anti-reflet, sont transparentes au rayonnement laser et ne peuvent donc pas être chauffées par ce moyen ;
- activation de la couche par un procédé de chauffage plus classique, par radiation et/ou convection, par passage dans un four chauffant le substrat verrier revêtu de la couche à activer; chaque verre est chauffé séparément l'un après l'autre comme par exemple dans un four tunnel ; ce procédé procure les inconvénients suivants :
   - le choix du couple temps / température est en pratique limité par la longueur du four ce qui introduit des contraintes pour l'activation de certaines couches ; à titre d'exemple, pour activer une couche en TiO₂ à fonction auto-nettoyante à une température de 400°C, il est nécessaire d'appliquer un temps de recuit d'au moins 30 minutes, ce qui est beaucoup trop long et rédhibitoire pour un four continu ;
   - coût de l'installation élevé, compte tenu des éléments périphériques nécessaires (dans le cas d'un four off-line, c'est-à-dire avec stockage intermédiaire des substrats) ou de la longueur importante des fours pour limiter les risques de casses thermiques (en particulier si le four est on-line, c'est-à-dire réalisé en continu à la suite du dépôt de la couche)

Dans ces deux types de procédé, les substrats verriers supportant la couche à activer défilent les uns après les autres dans une enceinte appliquant un traitement à chaque substrat l'un après l'autre. Comme documents de l'état de la technique, on peut citer les WO2013/026817 et US 2013/0320241. Une couche d'ITO concernée par la présente invention est notamment décrite dans EP2598455.

Les substrats verriers comprennent une feuille de verre et au moins une couche à activer, recouvrant partiellement ou totalement au moins l'une de ses faces principales. L'invention concerne plus particulièrement les substrats verriers de grande taille, notamment de surface principale d'au moins 4 m², voire même d'au moins 10 m², voire même d'au moins 15 m². Sont concernés par la présente invention les substrats verriers aux dimensions de ceux sortant directement des usines de fabrication de verre plat, notamment les panneaux dit PLF (6000 mm x 3210 mm) ou DLF (3210 mm x 2250 mm ; 3210 mm x 2200 mm ; etc). Le terme panneau est souvent utilisé pour désigner des substrats verriers ou feuilles de verre de grande dimension. Les substrats verriers à activer peuvent avoir une épaisseur comprise dans le domaine allant de 2 mm à 14 mm. L'invention concerne en premier lieu des substrats verriers découpés et plats.

L'invention repose sur l'utilisation en discontinu d'une enceinte de type batch (off-line) de taille modeste, notamment dont le volume interne est compris dans le domaine allant de 20 à 200 m³, dans laquelle il est possible de placer et de chauffer au moins une pile (synonyme de « empilement ») de substrats verriers simultanément, en pouvant contrôler séparément la température et le temps pendant lequel le verre est chauffé. Au moins un empilement de substrats verriers revêtus chacun d'une couche à activer sont placés dans une enceinte, les différents substrats d'un même empilement étant séparés par une poudre intercalaire facilitant leur séparation (c'est-à-dire dépilement) après le traitement thermique procuré par l'enceinte.

La poudre intercalaire est compatible avec ce traitement thermique et est stable chimiquement, notamment en stockage en entrepôt. La poudre intercalaire peut être à base de SiO₂, notamment comme celle commercialisée sous la marque SEPAROL DP. La poudre intercalaire peut être à base de CaCO₃ notamment comme celle commercialisée sous la marque ESKAL. La poudre intercalaire peut être appliquée sur les substrats par pulvérisation à l'aide d'un dispositif de poudrage. La poudre intercalaire présente avantageusement un D90 inférieur à 400 microns et de préférence inférieur à 200 microns. Ainsi, la poudre intercalaire est généralement à base de silicate ou de carbonate de calcium, et de D90 inférieur à 400 microns et de préférence inférieur à 200 microns

Ainsi, l'invention concerne en premier lieu un procédé d'activation d'une couche supportée par un substrat verrier comprenant le chauffage dans une enceinte d'un empilement, généralement de plusieurs empilements, de plusieurs exemplaires du substrat verrier revêtus d'une couche à activer située sur une face principale du substrat verrier, le cas échéant sur les deux faces principales du substrat verrier, lesdits substrats verriers étant séparés dans un même empilement par une poudre intercalaire. Ce qui vient d'être dit recouvre la possibilité que le substrat comprenne plusieurs couches à activer, lesdites couches se trouvant sur la même face ou étant partagées sur les deux faces du substrat verrier, un substrat verrier pouvant par ailleurs comprendre des couches à activer de nature différente. Grâce au procédé selon l'invention, la couche à activer est activée sans que les propriétés mécaniques du substrat verrier en soient modifiées. Ceci signifie que le traitement thermique ne modifie pas notamment les valeurs de contraintes dans le verre, ni son comportement aux chocs. Généralement, les substrats verriers revêtus de la couche à activer ne sont pas trempés thermiquement. Le verre du substrat verrier n'est généralement pas trempé thermiquement. La couche à activer est généralement déposée par pulvérisation cathodique magnétron et l'activation thermique selon l'invention accroit son caractère cristallin.

On peut placer dans l'enceinte par exemple de 1 à 20 empilements de substrats. Chaque empilement peut comprendre par exemple 2 à 30 substrats verriers revêtus.

Il est possible de placer au moins un empilement dans l'enceinte de sorte que les substrats verriers soient à l'horizontal. Cependant, on préfère faire reposer au moins un empilement dans l'enceinte de sorte que les substrats verriers reposent au moins en partie sur leur tranche. Pour ce faire, on peut utiliser un support du type chevalet. Notamment, l'angle entre un empilement et la verticale peut être compris dans le domaine allant de 0 à 10° et de préférence dans le domaine allant de 2 à 4°.

Généralement, les substrats verriers revêtus de la couche à activer sont plans. L'enceinte est fermée après le placement de l'empilement dans l'enceinte et le traitement thermique est appliqué alors que l'enceinte est fixe, et généralement, tout empilement dans l'enceinte est également fixe.

Les substrats verriers empilés sont chauffés dans l'enceinte selon un profil thermique comprenant un maximum en température. Le maximum en température est la température la plus haute subie par le substrat verrier pendant le traitement thermique. Le cas échéant, ce maximum en température peut être maintenu en un palier d'une certaine durée, notamment au moins 0,5 heure. Le maximum en température est inférieur au strain point (température inférieure de recuit en français, « strain point » étant une expression anglaise couramment utilisée par l'homme du métier en français) du verre contenu dans le substrat. Ainsi, le traitement thermique n'engendre à la feuille de verre contenue dans le substrat aucune déformation irréversible indésirable, et ne modifie donc pas ses propriétés mécaniques. L'homme du métier sait mesurer le strain point d'un verre, notamment par la méthode de flexion telle que décrite dans la norme ASTM C598-93. Généralement, le maximum en température peut être inférieur à 495°C et même inférieure à 450°C. L'invention concerne en premier lieu les substrats verriers dont le verre a un strain point supérieur à 495°C.

Le traitement thermique applique un profil thermique de nature à activer la couche à activer. La température minimale au-dessus de laquelle le substrat doit être porté dépend de la nature de la couche à activer. La durée pendant laquelle le substrat doit être chauffé au-dessus d'une température minimale dépend de la nature de la couche à activer. Le maximum en température du traitement thermique est généralement d'au moins 200°C et de préférence généralement d'au moins 250°C voire si besoin d'au moins 300°C. Plus la température du traitement thermique est haute, plus sa durée peut être courte. Par exemple un traitement d'un substrat à base d'ITO d'au moins une heure à 350°C convient. Les performances de la couche ne sont pas modifiées pour des temps de recuit plus longs au-dessus de la température minimale. En général, le substrat verrier est chauffé au moins 0,5 heure et de préférence au moins 1 heure à une température d'au moins 200°C et plus généralement d'au moins 300°C.

Pour le cas où la couche à activer est du type ITO (contenant généralement de 80% à 98% en poids d'oxyde de In et 2 à 20% en poids d'oxyde de Sn), le traitement thermique a pour but de cristalliser la couche et d'activer son dopant, pouvant notamment être Sn, de sorte que la fonction bas-émissive (low-e) lui soit conférée. Pour ce type de couche (ITO), un traitement thermique du substrat verrier au-dessus d'une température minimale d'au moins 300°C et de préférence d'au moins 350°C convient. La température du substrat est maintenue au-dessus de cette température minimale pendant au moins 0,5h, notamment au moins 2h. Pour l'activation d'une couche ITO, le maximum en température du profil thermique peut généralement être inférieur à 400°C.

Pour le cas où la couche à activer est du type auto-nettoyante et comprenant de l'oxyde de titane, le traitement thermique a pour but la formation de la phase anatase au sein de la couche. Dans ce cas, un traitement thermique du substrat verrier au-dessus d'une température minimale d'au moins 350°C et de préférence au moins 400°C convient. La température du substrat est maintenue au-dessus de cette température minimale pendant au moins 0,5h, notamment au moins 2h.

La couche à activer peut aussi être une couche en silice, notamment à fonction anti-reflet. Cette fonction anti-reflet peut notamment être apportée grâce à l'insertion dans la couche d'un matériau porogène organique, lequel est évacué lors du traitement thermique selon l'invention. La porosité ainsi produite dans la couche est à l'origine de la propriété anti-reflet. Dans ce cas, un traitement thermique du substrat verrier au-dessus d'une température minimale d'au moins 300°C et de préférence au moins 350°C convient. La température du substrat est maintenue au-dessus de cette température minimale pendant au moins 0,5h, notamment au moins 2h. A titre d'exemple, on peut réaliser une montée en température de la température ambiante jusqu'à 400°C en 9 heures, observer un palier de 2 heures à 400°C, puis redescendre jusqu'à la température ambiante en 9h. Ce type de couche est avantageusement déposée sur les deux faces principales de chaque substrat.

La couche à activer peut aussi être une couche en argent, notamment à fonction bas-émissive. Une couche en argent réalisée par pulvérisation cathodique nécessite d'être chauffée pour accroître son caractère cristallin et ainsi faire baisser son émissivité. Dans ce cas, un traitement thermique du substrat verrier au-dessus d'une température minimale d'au moins 250°C et de préférence au moins 300°C convient. La température du substrat étant maintenue au-dessus de cette température minimale pendant au moins 0,5h, notamment au moins 2h. De préférence, le maximum en température est inférieur à 400°C.

Lors de l'application du traitement thermique pour activer la couche, l'enceinte est généralement fermée. Dans l'enceinte, le chauffage est généralement réalisé par convection d'air chaud. L'air fait généralement l'objet d'un recyclage interne dans l'enceinte. Il est préférable d'exercer la montée en température à partir de la température ambiante jusqu'au maximum en température, d'observer un temps de palier à cette température, et enfin de faire redescendre la température du maximum en température jusqu'à la température ambiante de façon contrôlée. Pour cette montée et cette descente, on peut utiliser à chaque fois une durée comprise entre 5 et 20 heures, généralement de l'ordre de 10 heures. Ces durées longues réduisent les risques de casse thermomécaniques. Il existe un retard entre la température réelle du verre au sein d'un empilement et la température de l'air chaud entourant cet empilement. Ce retard est de l'ordre de 1 à 4 heures selon les cas. Le temps de palier au maximum en température est ainsi déterminé pour que l'ensemble des verres ait été portés à au moins ce maximum en température pendant un temps minimal d'activation, généralement au moins 0,5 heure.

Pour réduire encore les risques de casse, il est préférable de façonner le bord des substrats avant le traitement thermique, c'est-à-dire de passer rapidement un abrasif sur leurs bords ce qui en outre notamment les arrondi un peu. Ce façonnage élimine les défauts pouvant jouer le rôle d'amorce de fissure.

Le substrat verrier portant la couche à activer peut comprendre également au moins une autre couche, à activer ou non. Cette autre couche peut se trouver sur la même face du substrat verrier que la couche à activer où sur son autre face. Cette autre couche peut notamment se trouver entre le verre du substrat verrier et la couche à activer. A titre d'exemple, dans le cas d'une couche d'oxyde de titane autonettoyante à activer, on peut déposer tout d'abord une couche de SiO₂ sur une face principale du verre, puis, la couche d'oxyde de titane est déposée sur la couche de SiO₂. Dans ce cas, la couche de SiO₂ peut notamment avoir une épaisseur comprise entre 5 et 100 nm. La couche d'oxyde de titane peut avoir une épaisseur comprise entre 1 et 100 nm.

Les substrats verriers peuvent être empilés pour former des empilements, puis ces empilements peuvent ensuite être manipulés sous forme de piles avec des équipements standards d'usine et déposés sur un support, notamment du type chevalet, ledit support étant ensuite inséré dans l'enceinte de chauffage. Deux empilements voisins sont de préférence séparés d'une distance d'au moins un centimètre. Cette distance sert à la bonne circulation de l'air entre les empilements pour chauffer de façon plus homogène tous les substrats verriers dans l'enceinte. Ainsi, la distance entre les piles de substrats peut être réduite où agrandie pour trouver le juste compromis entre une forte capacité de chargement et une forte efficacité de chauffage.

Avantageusement les empilements reposent sur un matériau isolant thermique, par exemple du type tissu de fibre de verre.

De préférence, on évite les inhomogénéités de température dans le verre pouvant provenir de la géométrie du chevalet ou de transferts thermiques par les appuis sous les empilements.

Le mode de chauffage dans l'enceinte est du type flux d'air convectif afin d'homogénéiser les températures à la surface des substrats. Ce flux d'air peut-être soit vertical soit horizontal, et a de préférence une direction perpendiculaire à la plus grande dimension du verre.

Quand le traitement thermique est terminé, les substrats sont retirés de l'enceinte. Ils sont alors généralement mis sur un autre support, généralement un chevalet, pour être transportés ou être à nouveau stockés.

L'invention apporte notamment les avantages suivants :
- coûts d'équipement réduits,
- peu de risques technologiques,
- possibilité d'ajuster séparément la température de chauffage et le temps de chauffage, notamment un temps de palier au maximum en température,
- nécessite peu de place en usine.

Dans le but de réduire le coût énergétique du procédé selon l'invention, un système de récupération de l'énergie peut être installé pour récupérer la chaleur lors du refroidissement des substrats verrier.

Ainsi, le procédé d'activation selon l'invention peut se dérouler selon le processus suivant, après formation en verre plat, découpe en panneaux, application éventuelle d'une ou plusieurs couches sur au moins une face principale des feuilles de verre:
- éventuel façonnage des bords, puis
- déposition de la couche à activer, puis
- application de la poudre intercalaire, puis
- stockage en piles, puis
- placement des piles dans une enceinte et activation selon l'invention, puis
- stockage en piles.

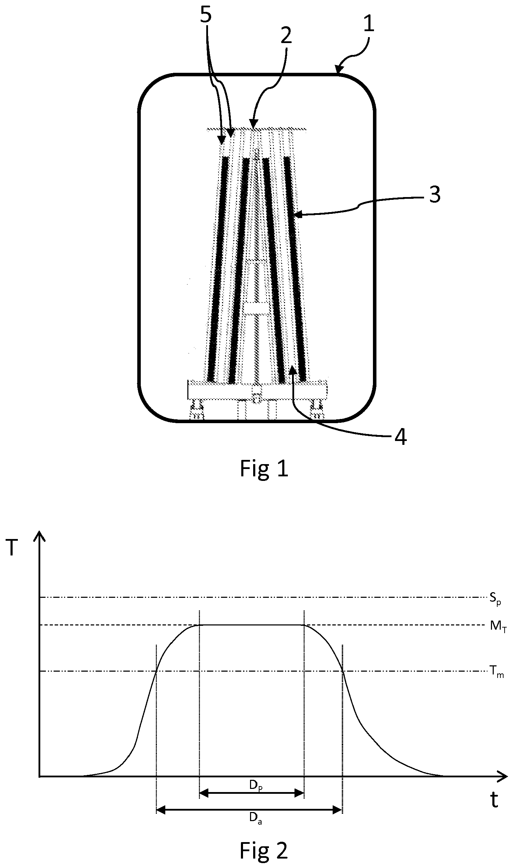

La figure 1 montre une enceinte 1 à l'intérieur de laquelle est disposé un chevalet 2 portant plusieurs empilements 3 de substrats verriers. Un espace 4 permet à l'air de circuler entre deux empilements voisins. Les empilements sont maintenus en place grâce à des espaceurs 5 laissant l'air circuler.

La figure 2 donne un exemple de profil thermique pouvant être appliqués aux substrats verriers empilés. La température d'un substrat verrier est donnée en ordonnée et le temps en abscisse. La température Sp est le strain point, c'est-à-dire la température inférieure de recuit que le profil thermique ne doit pas dépasser sous peine de modifier les propriétés mécaniques du verre. Dans cet exemple, un palier de température d'une durée Dₚ est appliqué au maximum en température M_{T}. La couche est activée essentiellement pendant la durée d'activation Dₐ, pendant laquelle le substrat est au-dessus d'une température minimale d'activation Tₘ.

## Revendications

1. Procédé d'activation d'une couche supportée par un substrat verrier comprenant le traitement thermique dans une enceinte d'un empilement de plusieurs exemplaires dudit substrat verrier, lesdits substrats verrier étant séparés par une poudre intercalaire.

2. Procédé selon la revendication précédente, **caractérisé en ce que** l'empilement comprend 2 à 30 substrats verriers.

3. Procédé selon l'une des revendications précédentes, **caractérisé en ce que** l'empilement repose dans l'enceinte au moins partiellement sur la tranche de ses substrats.

4. Procédé selon l'une des revendications précédentes, **caractérisé en ce que** l'empilement repose sur un chevalet.

5. Procédé selon l'une des revendications précédentes, **caractérisé en ce que** 1 à 20 empilements sont placés dans l'enceinte.

6. Procédé selon l'une des revendications précédentes, **caractérisé en ce que** plusieurs empilements sont placés dans l'enceinte, deux empilements voisins étant séparés l'un de l'autre par une distance d'au moins 1 cm.

7. Procédé selon l'une des revendications précédentes, **caractérisé en ce que** pendant le traitement thermique, l'enceinte est fixe et tout empilement dans l'enceinte est fixe.

8. Procédé selon l'une des revendications précédentes, **caractérisé en ce que** les substrats verriers sont chauffés à suffisamment basse température pour que les propriétés mécaniques de la feuille de verre du substrat verrier ne soient pas modifiées.

9. Procédé selon la revendication précédente, **caractérisé en ce que** les contraintes dans le verre et le comportement aux chocs du substrat verrier ne sont pas modifiés par le traitement thermique.

10. Procédé selon l'une des revendications précédentes, **caractérisé en ce que** le verre du substrat verrier n'est pas trempé.

11. Procédé selon l'une des revendications précédentes, **caractérisé en ce que** le traitement thermique comprend un maximum en température inférieur au strain point du verre contenu dans le substrat.

12. Procédé selon l'une des revendications précédentes, **caractérisé en ce que** le traitement thermique comprend un maximum en température inférieur à 495°C et même inférieure à 450°C.

13. Procédé selon l'une des deux revendications précédentes, **caractérisé en ce que** le maximum en température est d'au moins 200°C et généralement d'au moins 300°C.

14. Procédé selon la revendication précédente, **caractérisé en ce que** le substrat verrier est chauffé au moins 0,5 heure et de préférence au moins 1 heure à une température d'au moins 300°C.

15. Procédé selon l'une des revendications précédentes, **caractérisé en ce que** la couche à activer est déposée par pulvérisation cathodique magnétron, le traitement thermique accroissant son caractère cristallin.

16. Procédé selon l'une des revendications précédentes, **caractérisé en ce que** la couche à activer est une couche ITO, ou une couche d'oxyde de titane, ou une couche de SiO₂ ou une couche d'argent.

17. Procédé selon l'une des revendications précédentes, **caractérisé en ce que** le chauffage est réalisé par convection d'air chaud dans l'enceinte.

18. Procédé selon l'une des revendications précédentes, **caractérisé en ce que** la poudre intercalaire est à base de silicate ou de carbonate de calcium et de D90 inférieur à 400 microns et de préférence inférieur à 200 microns.

## Patentansprüche

1. Verfahren zur Aktivierung einer von einem Glassubstrat getragenen Schicht, umfassend die Wärmebehandlung von einem Stapel von mehreren Exemplaren des Glassubstrats in einem Behälter, wobei die Glassubstrate durch ein Zwischenschichtpulver getrennt sind.

2. Verfahren nach dem vorhergehenden Anspruch, **dadurch gekennzeichnet, dass** der Stapel 2 bis 30 Glassubstrate umfasst.

3. Verfahren nach einem der vorhergehenden Ansprüche, **dadurch gekennzeichnet, dass** der Stapel in dem Behälter mindestens teilweise auf der Schmalseite seiner Substrate aufliegt.

4. Verfahren nach einem der vorhergehenden Ansprüche, **dadurch gekennzeichnet, dass** der Stapel auf einem Gestell aufliegt.

5. Verfahren nach einem der vorhergehenden Ansprüche, **dadurch gekennzeichnet, dass** 1 bis 20 Stapel in dem Behälter platziert sind.

6. Verfahren nach einem der vorhergehenden Ansprüche, **dadurch gekennzeichnet, dass** mehrere Stapel in dem Behälter platziert sind, wobei zwei benachbarte Stapel durch einen Abstand von mindestens 1 cm voneinander getrennt sind.

7. Verfahren nach einem der vorhergehenden Ansprüche, **dadurch gekennzeichnet, dass** während der Wärmebehandlung der Behälter fest ist und dass jeder Stapel in dem Behälter fest ist.

8. Verfahren nach einem der vorhergehenden Ansprüche, **dadurch gekennzeichnet, dass** die Glassubstrate bei ausreichend niedriger Temperatur erhitzt werden, damit die mechanischen Eigenschaften der Glasscheibe des Glassubstrats nicht verändert werden.

9. Verfahren nach dem vorhergehenden Anspruch, **dadurch gekennzeichnet, dass** die Spannungen in dem Glas und das Verhalten des Glassubstrats gegenüber Stößen durch die Wärmebehandlung nicht verändert werden.

10. Verfahren nach einem der vorhergehenden Ansprüche, **dadurch gekennzeichnet, dass** das Glas des Glassubstrats nicht gehärtet ist.

11. Verfahren nach einem der vorhergehenden Ansprüche, **dadurch gekennzeichnet, dass** die Wärmebehandlung ein Maximum an Temperatur umfasst, das unter dem Belastungspunkt des in dem Substrat enthaltenen Glases liegt.

12. Verfahren nach einem der vorhergehenden Ansprüche, **dadurch gekennzeichnet, dass** die Wärmebehandlung ein Maximum an Temperatur unter 495 °C und sogar unter 450 °C umfasst.

13. Verfahren nach einem der zwei vorhergehenden Ansprüche, **dadurch gekennzeichnet, dass** das Maximum an Temperatur mindestens 200 °C und im Allgemeinen mindestens 300 °C beträgt.

14. Verfahren nach dem vorhergehenden Anspruch, **dadurch gekennzeichnet, dass** das Glassubstrat mindestens 0,5 Stunden lang und bevorzugt mindestens 1 Stunde lang bei einer Temperatur von mindestens 300 °C erhitzt wird.

15. Verfahren nach einem der vorhergehenden Ansprüche, **dadurch gekennzeichnet, dass** die zu aktivierende Schicht mittels Magnetronsputtern aufgebracht wird, wobei die Wärmebehandlung ihren kristallinen Charakter erhöht.

16. Verfahren nach einem der vorhergehenden Ansprüche, **dadurch gekennzeichnet, dass** die zu aktivierende Schicht eine ITO-Schicht oder eine Titanoxid-Schicht oder eine Si02-Schicht oder eine Silberschicht ist.

17. Verfahren nach einem der vorhergehenden Ansprüche, **dadurch gekennzeichnet, dass** das Erhitzen mittels Konvektion von Heißluft im Behälter erfolgt.

18. Verfahren nach einem der vorhergehenden Ansprüche, **dadurch gekennzeichnet, dass** das Zwischenschichtpulver auf Silicat- oder Calciumcarbonatbasis ist und eine D90 von unter 400 Mikron und bevorzugt von unter 200 Mikron aufweist.

## Claims

1. A process for activating a layer supported by a glass substrate comprising the heat treatment in a chamber of a stack of several examples of said glass substrate, said glass substrates being separated by an interlayer powder.

2. The process as claimed in the preceding claim, **characterized in that** the stack comprises 2 to 30 glass substrates.

3. The process as claimed in either of the preceding claims, **characterized in that** the stack rests in the chamber at least partially on the edge of its substrates.

4. The process as claimed in one of the preceding claims, **characterized in that** the stack rests on a trestle.

5. The process as claimed in one of the preceding claims, **characterized in that** 1 to 20 stacks are placed in the chamber.

6. The process as claimed in one of the preceding claims, **characterized in that** several stacks are placed in the chamber, two neighboring stacks being separated from one another by a distance of at least 1 cm.

7. The process as claimed in one of the preceding claims, **characterized in that** during the heat treatment, the chamber is stationary and any stack in the chamber is stationary.

8. The process as claimed in one of the preceding claims, **characterized in that** the glass substrates are heated at a sufficiently low temperature so that the mechanical properties of the glass sheet of the glass substrate are not modified.

9. The process as claimed in the preceding claim, **characterized in that** the stresses in the glass and the impact behavior of the glass substrate are not modified by the heat treatment.

10. The process as claimed in one of the preceding claims, **characterized in that** the glass of the glass substrate is not tempered.

11. The process as claimed in one of the preceding claims, **characterized in that** the heat treatment comprises a temperature maximum below the strain point of the glass contained in the substrate.

12. The process as claimed in one of the preceding claims, **characterized in that** the heat treatment comprises a temperature maximum below 495°C and even below 450°C.

13. The process as claimed in one of the two preceding claims, **characterized in that** the temperature maximum is at least 200°C and generally at least 300°C.

14. The process as claimed in the preceding claim, **characterized in that** the glass substrate is heated for at least 0.5 hour and preferably for at least 1 hour at a temperature of at least 300°C.

15. The process as claimed in one of the preceding claims, **characterized in that** the layer to be activated is deposited by magnetron sputtering, the heat treatment increasing its crystalline nature.

16. The process as claimed in one of the preceding claims, **characterized in that** the layer to be activated is an ITO layer, or a titanium oxide layer, or an SiO₂ layer, or a silver layer.

17. The process as claimed in one of the preceding claims, **characterized in that** the heating is carried out by hot air convection in the chamber.

18. The process as claimed in one of the preceding claims, **characterized in that** the interlayer powder is based on calcium carbonate or silicate and has a D90 of less than 400 microns and preferably less than 200 microns.
